# EUROPÄISCHE PATENTSCHRIFT

(11) **EP 1 407 235 B1**
(45) Veröffentlichungstag und Bekanntmachung des Hinweises auf die Patenterteilung: **21.03.2012**
(21) Anmeldenummer: 02742621.2
(22) Anmeldetag: 09.07.2002
(51) Int. Cl.: G01F 15/00

(54) **ABTASTVERFAHREN FÜR DURCHFLUSSMESSGERÄTE**
SCANNING METHOD FOR FLOWMETERS
PROCEDE D'EXPLORATION POUR DEBITMETRES

(30) Priorität: 16.07.2001 DE 10134457
(43) Veröffentlichungstag der Anmeldung: 14.04.2004
(73) Patentinhaber: Hydrometer GmbH, 91522 Ansbach (DE)
(72) Erfinder: KRAMER, Beat, CH-5210 Windisch (CH); MATTER, Daniel, CH-5200 Brugg (CH); KLEINER, Thomas, CH-5442 Fislisbach (CH)
(74) Vertreter: Diehl Patentabteilung
(86) Internationale Anmeldenummer: PCT/CH2002/000372
(87) Internationale Veröffentlichungsnummer: WO 2003/008914

(56) Entgegenhaltungen:
- US-A- 6 109 477
- PATENT ABSTRACTS OF JAPAN vol. 1999, no. 12, 29. Oktober 1999 (1999-10-29) & JP 11 183230 A (YAZAKI CORP), 9. Juli 1999 (1999-07-09)

## Beschreibung

### TECHNISCHES GEBIET

Die vorliegende Erfindung bezieht sich auf das Gebiet der Durchflussmessgeräte wie Gasmeter oder Wasserzähler. Sie betrifft ein Abtastverfahren zur Bestimmung eines Gesamtverbrauchs gemäss dem Oberbegriff des Patentanspruchs 1.

### STAND DER TECHNIK

In der noch unveröffentlichten Europäischen Patentanmeldung Nr 00810511.6 ist ein Gasenergiemessgerät basierend auf einem kostengünstigen CMOS Durchflussensor dargestellt, welches einen Erdgas-Verbrauch bestimmt und aufgrund der angewendeten Messmethode eine Eichung in Normvolumen oder direkt in Gasenergie ermöglicht. Die Eichung in Normvolumen ist deshalb möglich, da das neue Gasmeter den (druck- und temperaturuhabhängigen) Massenfluss bestimmt und damit die Umrechnung in ein dem Gas entsprechendem Volumen unter Normbedingungen (z.B. 20°C, 1, bar) einfach zu bewerkstelligen ist. Da das Messsignal dieses neuen Gasmeters aufgrund seiner Sensitivität bezüglich den drei Hauptkomponenten (Methan, Ethan und Propan) entsprechend deren spezifischen Brennwerte richtig gewichtet ist es zusätzlich möglich das Gerät direkt in Energie zu eichen.

Bei einem derartigen elektronischen Gasmeter werden periodisch, beispielsweise alle zwei Sekunden, während einigen Millisekunden die physikalischen Grössen wie Massenfluss, Volumenfluss oder Gasenergie gemessen. Diese Momentanwerte werden anschliessend im Gasmeter selbst integriert und der integrierte Gesamtverbrauch periodisch, beispielsweise monatlich oder halbjährlich, an eine Zentrale übermittelt.

Es wird weltweit ein grosser Aufwand betrieben, um Messgeräte wie Wasserzähler, Heisswasserzähler, elektrische Energiezähler oder Gasmeter so zu manipulieren, dass sie einen kleineren Wert Anzeigen als tatsächlich bezogen wurde. Dadurch erleidet ein Versorgungsbetrieb oder Lieferant eine deutliche finanzielle Einbusse.

### DARSTELLUNG DER ERFINDUNG

Aufgabe der vorliegenden Erfindung ist es, bei Durchflussmessgeräten die Betrugssicherheit zu erhöhen und eine korrekte Abrechnung der bezogenen Quantität zu ermöglichen. Diese Aufgabe wird durch ein Abtastverfahren für Durchflussmessgeräte mit den Merkmalen des Patentanspruchs 1 gelöst.

Bei äquidistanten Abtastungen kann beispielsweise ein Gas- oder Wasserstrom so moduliert werden, dass während der Abtastung mittels eines Ventils der Fluss durch das Durchflussmessgerät kurzzeitig für einige 100 ms reduziert oder unterbrochen wird. Befindet sich Letzteres in einem Bypassrohr zu einem Hauptleitungsrohr oder ist das Gas- oder Wassernetz auf der Verbraucherseite genügend gross, so hat dies auf die angeschlossenen Geräte keinen Einfluss, d.h. eine Gasflamme erlischt dadurch nicht beziehungsweise ein Wasserstrom wird nicht unterbrochen. Kern der Erfindung ist es deshalb, die Abtastungen nicht äquidistant vorzusehen, sondern innerhalb eines bestimmten Zeitfensters statistisch zu verteilen. Durch die Unvorhersehbarkeit der nächsten Abtastung wird es für eine aussenstehende Person viel schwieriger, den Gas- oder Wasserfluss betrügerisch zu modulieren.

Die Erfindung wird durch Anspruch 1 definiert.

Vorteilhafte Ausführungsformen gehen aus den abhängigen Patentansprüchen hervor.

### KURZE BESCHREIBUNG DER FIGUREN

Nachfolgend wird die Erfindung anhand von Ausführungsbeispielen im Zusammenhang mit den Zeichnungen näher erläutert. Es zeigen
Fig.1 eine äquidistante Abtastung eines Gasstromes nach dem Stand der Technik und
Fig.2 eine stochastische Abtastung nach der Erfindung.

### WEGE ZUR AUSFÜHRUNG DER ERFINDUNG

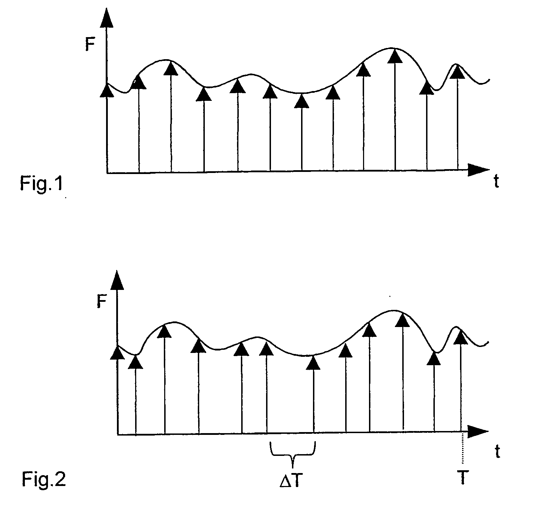

In Fig.2 ist eine erfindungsgemässe, nicht äquidistante Abtastung eines Durchflusses F gezeigt. Um Einbussen bei der Messgenauigkeit zu vermeiden, sind innerhalb einer gewissen Zeitspanne T wie im Fall einer äquidistanten Abtastung N Momentanwerte F₁, F₂, ... F_{N} zu ermitteln. Der zeitliche Abstand ΔT zwischen zwei aufeinanderfolgenden Messwerten ist dabei nicht konstant, sondern zufällig gewählt. Erfindungsgemäß folgt die Verteilung dieser Abstände einer Normal- oder Gaussverteilung um den äquidistanten Mittelwert T/N mit einer Varianz von maximal 0.02·(T/N)².

Die gemessenen Momentanwerte werden aufintegriert. Dies geschieht mit den zufällig abgetasteten Werten, indem Letztere mit den exakten zufälligen zeitlichen Abständen ΔT multipliziert und anschliessend addiert werden. Der damit verbundene Aufwand ist höher als im Falle von äquidistant verteilten Werten, dafür entstehen auch keine zusätzlichen Fehler.

## Patentansprüche

1. Abtastverfahren für Durchflussmessgeräte, die sich in einem Bypassrohr zu einem Hauptleitungsrohr befindet oder wobei ein Gas- oder Wassernetz auf der Verbraucherseite genügend groß ist, so dass eine betrügerische Manipulation auf angeschlossene Geräte keinen Einfluss hat, bei dem in einer gewissen Zeitspanne (T) eine bestimmte Anzahl (N) von Durchfluss-Momentanwerten (F₁, F₂,..., F_{N}) eines Gas- oder Wasserstroms durch das Durchflussmessgerät ermittelt wird, wobei die zeitlichen Abstände (ΔT) zwischen zwei aufeinanderfolgenden Momentanwerten (F₁, F₂, ... , F_{N}) zufällig gewählt werden, wobei ferner die gemessenen Momentanwerte (F₁, F₂,..., F_{N}) aufintegriert werden, indem die zufällig abgetasteten Momentanwerte (F₁, F₂, ... , F_{N}) mit den exakten zufälligen zeitlichen Abständen (ΔT) multipliziert und anschließend addiert werden und durch die Unvorhersehbarkeit der nächsten Abtastung es einer außenstehenden Person erschwert wird, den Gas- oder Wasserstrom betrügerisch zu modulieren,
wobei die Gesamtheit der zeitlichen Abstände (ΔT) eine Normalverteilung um einen äquidistanten Mittelwert (T/N) bildet und die Normalverteilung eine Varianz von maximal 0.02 (T/N)² um den äquidistanten Mittelwert (T/N) aufweist, wobei der zeitliche Abstand (ΔT) zwischen zwei aufeinanderfolgenden Messwerten nicht konstant gewählt wird.

2. Verwendung eines Abtastverfahrens nach Anspruch 1 in einem Durchflussmessgerät, **dadurch gekennzeichnet, dass** das Durchflussmessgerät ein Wasserzähler, ein Heißwasserzähler oder ein Gasmeter ist.

## Claims

1. Sampling method for flowmeters which are in a bypass tube to a main pipeline or where a gas or water mains is sufficiently large on the consumer side such that fraudulent manipulation does not influence connected devices, in which a particular number (N) of flow instantaneous values (F₁, F₂, ..., F_{N}) of a gas or water flow through the flowmeter is determined in a certain period of time (T), the intervals of time (ΔT) between two successive instantaneous values (F₁, F₂, ... , F_{N}) being randomly selected, the measured instantaneous values (F₁, F₂, ..., F_{N}) furthermore being integrated by multiplying the randomly sampled instantaneous values (F₁, F₂, ..., F_{N}) by the exact random intervals of time (ΔT) and then adding them, and the unpredictability of the next sampling operation making it difficult for an outsider to fraudulently modulate the gas or water flow,
all of the intervals of time (ΔT) forming a normal distribution around an equidistant mean value (T/N), and the normal distribution having a variance of at most 0.02 (T/N)² about the equidistant mean value (T/N), the interval of time (ΔT) between two successive measured values not being selected to be constant.

2. Use of a sampling method according to Claim 1 in a flowmeter, **characterized in that** the flowmeter is a water meter, a hot water meter or a gas meter.

## Revendications

1. Procédé de saisie pour appareils de mesure de débit situés dans un tube de dérivation d'un tube de conduit principal,
un réseau de distribution de gaz ou d'eau côté consommateur étant suffisamment grand pour qu'une manipulation frauduleuse n'ait pas d'influence sur les appareils raccordés,
et dans lequel au cours d'un certain laps de temps (T), un nombre défini (N) de valeurs instantanées de débit (F₁, F₂, ..., F_{N}) d'un écoulement de gaz ou d'eau à travers l'appareil de mesure de débit est déterminé, les écarts temporels (ΔT) entre deux valeurs instantanées successives (F₁, F₂, ... , F_{N}) étant sélectionnés de manière aléatoire,
les valeurs instantanées (F₁, F₂, ..., F_{N}) mesurées étant intégrées en multipliant les valeurs instantanées (F₁, F₂, ... , F_{N}) saisies de manière aléatoire par les écarts temporels aléatoires exacts (ΔT) et ensuite en les additionnant, l'imprévisibilité de la saisie suivante rendant difficile à une personne située à l'extérieur de moduler frauduleusement l'écoulement de gaz ou d'eau,
la totalité des écarts temporels (ΔT) formant une distribution normale autour d'une valeur moyenne (T/N) équidistante, la distribution normale présentant une variance d'au plus 0,02 (T/N)² autour de la valeur moyenne équidistante (T/N), l'écart temporel (ΔT) entre deux valeurs de mesure successives n'étant pas maintenu constant.

2. Utilisation d'un procédé de saisie selon la revendication 1 dans un appareil de mesure de débit, **caractérisée en ce que** l'appareil de mesure de débit est un compteur d'eau, un compteur d'eau chaude ou un compteur de gaz.
